# EUROPEAN PATENT SPECIFICATION

(11) **EP 2 639 091 B1**
(45) Date of publication and mention of the grant of the patent: **06.05.2015**
(21) Application number: 13158796.6
(22) Date of filing: 12.03.2013
(51) Int. Cl.: B60K 6/365, B60K 6/48, B60K 6/52, B60K 6/445, B60K 17/354, B60K 17/356

(54) **Power split electric all-wheel drive**
Elektrischer Allradantrieb mit geteilter Leistung
Transmission à quatre roues motrices à dérivation de puissance

(30) Priority: 12.03.2012 US 201261609608 P
(43) Date of publication of application: 18.09.2013
(73) Proprietor: Ricardo, Inc., Van Buren Township, MI 48111 (US)
(72) Inventor: DeLucia, Thomas Jude, Canton, MI Michigan 48188 (US); Brentnall, Jonathan Philip, Ortonville, MI Michigan 48462 (US); Mepham, Shaun Ewen, Saline, MI Michigan 48176 (US)
(74) Representative: Lewin, David Nicholas

(56) References cited:
- EP-A2- 1 544 018
- WO-A2-2008/135838
- GB-A- 2 438 609
- US-A1- 2010 138 107
- US-A1- 2012 017 854

## Description

### BACKGROUND OF THE INVENTION

The present invention relates to a drivetrain for an automobile, and more particularly to a drivetrain for an all-wheel drive vehicle.

High-performance automobiles often utilize a rear-wheel drive drivetrain or powertrain. A conventional manual-shift rear-wheel drive drivertrain may include a flywheel on the rear of the engine, a clutch, a transmission, a driveshaft, a differential and then axles to the wheels. A conventional automatic-shift rear-wheel drive drivertrain will typically not include a flywheel or a clutch, but instead will include a flex plate and torque converter. Many high performance automobiles include an engine capable of producing torque that far exceeds the tractive limit of the rear tires.

To improve overall performance, a number of high-performance automobiles have been provided with all-wheel drive or four-wheel drive. Four-wheel drive has the potential to improve handling by increasing traction between the automobile and the road. In one conventional system, four-wheel drive is incorporated into an automobile by providing a transfer case that receives power from the transmission and sends it to both the front and rear wheels. Although effective in providing four-wheel drive, a transfer case adds weight and cost to automobile. Further, a transfer case and the related drivetrain components, such as the driveshaft/propeller, can be rather difficult to package into an automobile. In view of these disadvantages, some systems have been developed that do not include a transfer case. For example, in one existing system, an optional connectable four-wheel drive is added to an otherwise rear-wheel drive vehicle. In this system, a generally conventional rear-wheel drive drivetrain is mounted to the rear of the engine (coupled to the rear end of the crank) to provide power to the rear wheels. In addition, an optionally connectable front drivetrain is mounted to the front of the engine (coupled to the front end of the crank) to drive the front wheels when desired. The front drivetrain includes a clutch, a gear drive and a front differential. The clutch allows the front drivetrain to be disconnected from engine when it is desirable to operate the automobile in rear-wheel drive mode.

There is continued growth in the integration of electric machines into automobile applications. At present time, there are a variety of existing systems in which one or more electric machine are incorporated into an automobile to, among other things, provide power to the drivetrain, engine stop-start, cold start assist, regenerative braking and/or through-the-road regeneration. For example, in the context of two-wheel drive hybrid vehicles, an electric machine may be coupled to the engine drivetrain by a power split arrangement, such as a planetary gear set. The power split arrangement allows the electric machine to, among other things, drive the two wheels or add supplemental power to the two driven wheels. In another existing system, an electric machine is coupled to the crank shaft by a belt. In this type of system, the electric machine may be used to start the engine, assist the engine during cold starts, assist the engine while driving and function as a generator.

Electric machines are also used to implement four-wheel drive in some applications. For example, in at least one existing system, the engine and associated drivetrain are used to supply power to the rear wheels and a pair of electric machine is used to supply power to each of the front wheels.

WO-A2-2008/135838 discloses a four-wheel drive hybrid vehicle comprising: two first wheels arranged on a same axis; two second wheels arranged on a same axis; an internal combustion engine provided with a crankshaft; a first transmission line, which originates from a first power take-off end of the crankshaft, transmits the power to the first wheels, and comprises a gearbox, and a first differential gear device; and a second transmission line, which originates from a second power take-off end of the crankshaft opposite the first power take- off end, transmits the power to the second wheels, and comprises a second differential gear device; the second transmission line is provided with a planetary gear device which comprises a first rotating element mechanically connected to the crankshaft, a second rotating element mechanically connected to the second differential gear device, and a third rotating element mechanically connected to a reversible electric machine.

### SUMMARY OF THE INVENTION

The present invention is defined by the independent claims, to which reference should now be made. Specific embodiments are defined in the dependent claims. The present invention provides a front drivetrain capable of providing, among other things, all-wheel drive to a rear-wheel drive automobile. The front drivetrain is for use with north/south oriented engines, in which the rear drivetrain is coupled to and driven by the rear end of the crank shaft.

In one embodiment, the front drivetrain is coupled to the front end of the crank shaft and includes a power split planetary gear arrangement that couples an electric machine or hydraulic motor pump to the drivetrain. In one example arrangement useful for understanding the present invention, the planetary gear arrangement includes a sun gear coupled to the crank shaft, a planetary gear set with a carrier coupled to the driveshaft, and a ring gear coupled to the electric machine. The driveshaft may be connected to left and right front axles by a bevel gear set and a differential. In the present invention, the sun gear is coupled to the electric machine and the ring gear can be coupled to the crank shaft. In an embodiment, the planetary gear set remains coupled to the driveshaft. In one embodiment, a decoupler is disposed between the crank shaft and the planetary gear arrangement. The decoupler may be a spring coupler.

In one embodiment, a disconnecting clutch may be disposed between the crank shaft and the planetary gear arrangement. The clutch may be operated to selectively disconnect the front drivetrain from the engine. The disconnecting clutch may be combined with a decoupler. For example, in one embodiment, the front drivetrain includes a spring coupler with an integrated disconnecting clutch.

In one example arrangement, the crank shaft is connected to the sun gear, the electric machine is coupled to the ring gear and the planetary carrier is coupled to the bevel gear to drive the front wheels. In such example arrangements, the system may include a ring gear grounding clutch that enables a direct mechanical drive from the engine to the front wheels. This mechanism may be used to provide the vehicle with "off-road" or "crawling" capabilities. In "off-road" mode, the ring gear grounding clutch may be engaged and the transmission may be placed in neutral to allow the engine to drive only the front wheels.

In one embodiment, the front drivetrain may include a differential disconnect. The differential disconnect may include a clutch incorporated into the differential. The differential disconnect can be operated with the disconnecting clutch to isolate a majority of the front drivetrain from the engine and the road.

In one embodiment, the crank shaft is connected to the ring gear, the electric machine is coupled to the sun gear and the planetary carrier is coupled to the bevel gear to drive the front wheels. In such embodiments, the system may include an engine disconnect and a ring gear grounding clutch that enables an electric vehicle mode in which the electric machine is capable of directly powering the front wheels. In EV mode, the ring gear grounding clutch may be engaged and the engine disconnect may be disconnected, thereby allowing the electric machine to power the vehicle with the engine off and the transmission in neutral.

In one embodiment, the present invention provides a series mode configuration in which power is supplied to the electric machine by an alternator or generator powered by the engine. In this embodiment, the system may include an alternator coupled to the crank by a belt. The output of the alternator may be supplied to the electric machine to operate the electric machine.

The present invention provides a simple and effective front drivetrain capable of providing four-wheel drive to an otherwise rear-wheel drive automobile. Advantageously, speed synchronization between the front wheels and the rear wheels is passively controlled by the crank and the front axle. The electric machine can be operated to provide active torque control. In embodiments that include a decoupler (e.g. a spring coupler) between the crank and the planetary gear arrangement, the crank shaft is torsionally isolated to help to prevent or minimize movement of the nodal point of the crank shaft. The present invention allows for elimination of a transfer case, front prop shaft and starter motor. The power split arrangement of the present invention provides a simple architecture and allows for the use of a smaller electric machine and/or a less powerful internal combustion engine. The present invention allows incorporation of an electric machine in various configurations that may, among other things, provide active torque control to the front wheels, starter/generator functionality, regenerative braking and regeneration through the road. In various embodiments, the present invention may also provide "off-road" mode, electric vehicle mode and series mode where it is desirable not to include a traction battery.

These and other features of the invention will be more fully understood and appreciated by reference to the description of the embodiments and the drawings.

### BRIEF DESCRIPTION OF THE DRAWINGS

Fig. 1 is a schematic representation showing a front drivetrain in accordance with an example arrangement useful for understanding the present invention.
Fig. 2 is a schematic representation of an alternative front drivetrain having a decoupler.
Fig. 3 is a schematic representation of an alternative front drivetrain having a decoupler and a disconnecting clutch.
Fig. 4 is a schematic representation of an alternative front drivetrain having a decoupler, a disconnecting clutch and a ring-gear grounding clutch.
Fig. 5 is a schematic representation of an alternative front drivetrain having a decoupler, a disconnecting clutch and a differential disconnect.
Fig. 6 is a schematic representation of an alternative front drivetrain, embodying the present invention, in which the ring gear is coupled to the crank shaft and the sun gear is coupled to the electric machine.
Fig. 7 is a schematic representation of an alternative front drivetrain, embodying the present invention, capable of providing electric vehicle mode similar to Fig. 6 including a disconnecting clutch and a ring-gear grounding clutch.
Fig. 8 is a schematic representation of an alternative front drivetrain capable of providing series mode operation.
Fig. 9 is a planetary lever diagram of torque within an exemple arrangement of the present invention.
Fig. 10 is a planetary lever diagram of speeds within an exemple arrangement of the present invention.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components.

### DESCRIPTION OF CURRENT EMBODIMENTS

The present invention relates to a front drivetrain capable of being incorporated into a rear-wheel drive architecture to provide an automobile with all-wheel drive. The automobile may include a north/south oriented engine and may include a rear drivetrain that is coupled to the rear end of the crank shaft and provides power to the rear wheels. The present invention includes a power-split planetary gear arrangement that allows the front drivetrain to receive power from the engine and an electric machine. As described in more detail below, the present invention may be implemented in a variety of alternative embodiments. Depending on the embodiment, the planetary gear arrangement and/or the electric machine may provide the automobile with a variety of optional capabilities. For purposes of disclosure, the present invention is described in connection with a front engine layout, but the present invention may alternatively be incorporated into other north/south engine layouts, such as mid-engine layout.

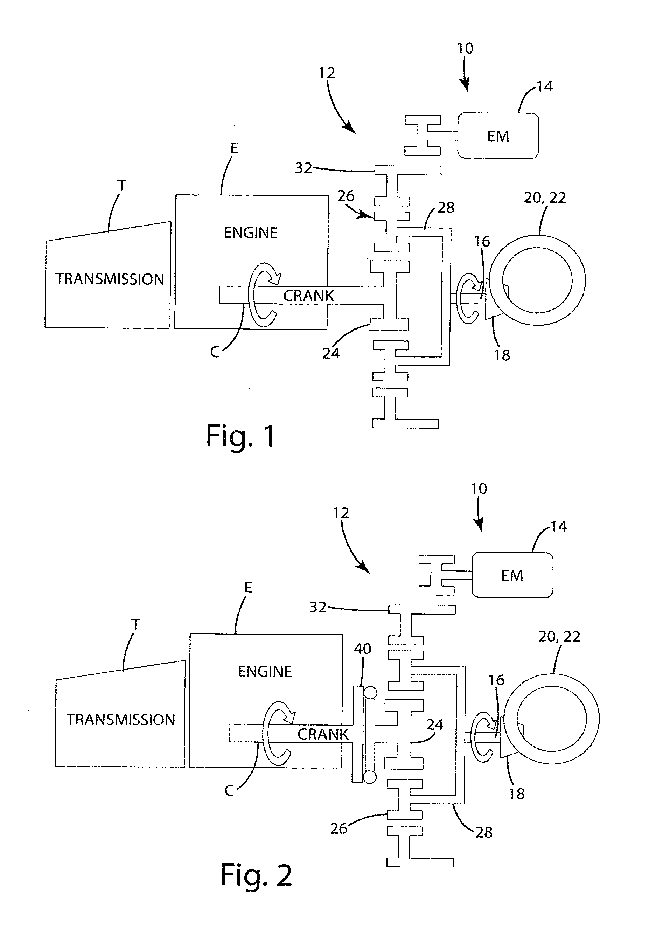

A front drivetrain in accordance with an example arrangement is shown schematically in Fig. 1 and generally designated 10. Fig. 1 shows the front drivetrain 10 incorporated into a front engine layout having a north/south oriented engine E. The engine E includes a crank shaft C that is operatively coupled to the rear drivetrain. The rear drivetrain may be essentially any drivetrain. However, the rear drivetrain of Fig. 1 includes a transmission T coupled to the rear end of the crank shaft C. Although not shown, the transmission T may be operatively connected to the rear wheels using essentially any desired drivetrain components. For example, the transmission T may be coupled to the rear wheels by a driveshaft, a differential and then axles to the wheels.

In the arrangement of Fig. 1, the front drivetrain 10 generally includes a planetary gear arrangement 12 coupled to the front end of the crank shaft C, an electric machine 14 operatively engaged with the planetary gear arrangement 12, a planetary gear output shaft 16, a bevel gear arrangement 18 receiving power from the output shaft 16 and a pair of front axles 20, 22 for supplying power to the front wheels. In the arrangement of Fig. 1, the front axles 20, 22 may be joined by a differential (not shown in Fig. 1) that allows the two front wheels to turn at different speeds, for example, when cornering.

In the arrangement of Fig. 1, the planetary gear arrangement 12 includes a sun gear 24 coupled to the front end of the crank shaft C, a planetary gear set 26 having a carrier 28 coupled to the planetary gear output shaft 16 and a ring gear 32 coupled to the electric machine 14. The sun gear 24 may be coupled to the front end of the crank shaft C in essentially any way. For example, the front end of the crank shaft C may be coupled to the sun gear 24 by a planetary gear input shaft (not shown). The input shaft may be welded, splined or otherwise mechanically joined to the front end of the crank shaft C. Similarly, the input shaft may be welded, splined or otherwise mechanically joined to the sun gear 24. The planetary gear set 26 may be any of a wide variety of any planetary gear sets. For example, the planetary gear set 26 may include a plurality of planetary gears (e.g. four) engaged with the sun gear 24 at radially symmetric locations. The planetary gears may be tied together by the carrier 28 so that movement of the planetary gears results in movement of the carrier 28. The carrier 28 may be coupled to the output shaft 16 in essentially any way. For example, the carrier 28 and output shaft 16 may be fixed together, such as by welding, or they may be coupled together mechanically, such as by splines or pins. As in a typical planetary gear arrangement, the ring gear 32 is disposed about the planetary gear set 26 and includes internal teeth that engage the external teeth of the planetary gears. In this arrangement, the ring gear 32 is also coupled to the electric machine 14. These components may be coupled in any of a wide variety of ways. In one arrangement, the ring gear 32 may include internal teeth that interface with the planetary gear set 26 and external teeth that interface with the electric machine 14. For example, the ring gear 32 may include an annular body with internal teeth and external teeth on opposite sides of the body. As another example, the ring gear 32 may include two joined annular bodies-one with internal teeth and the other with external teeth.

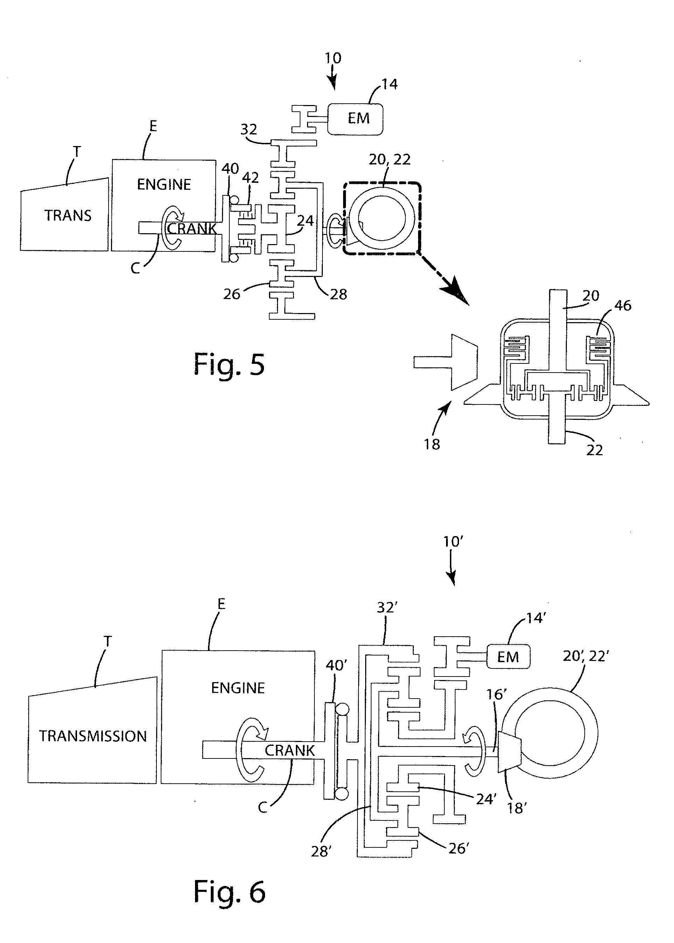

The front drivetrain subassembly downstream from the planetary gear arrangement 12 may be essentially any assembly of drivetrain components capable of driving the front wheels in the desired manner. In the illustrated arrangement, the subassembly includes planetary output shaft 16 which is coupled to bevel gear arrangement 18 (or miter gear arrangement) that translates rotation of the north/south oriented output shaft 16 into rotation of the east/west oriented front axles 20, 22. The front drivetrain subassembly may include alternative power translating components, as desired. As noted above, the front drivetrain subassembly may include a differential (See Fig. 5). For example, the differential may be integrated into the bevel gear arrangement.

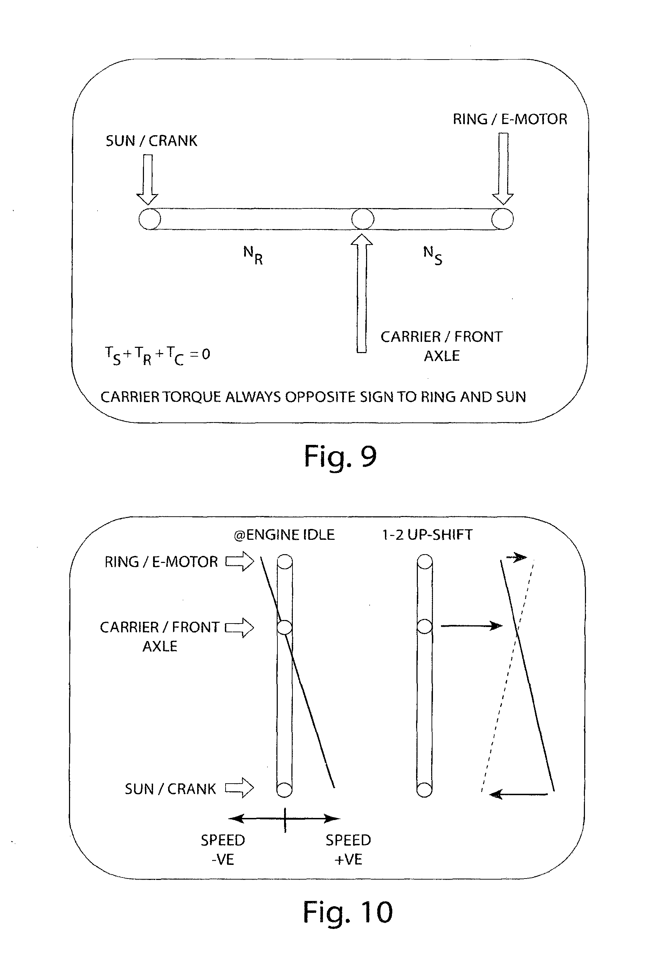

The front drivetrain 10 may be operated in a variety of different modes. In all-wheel drive mode, the electric machine 14 may be used to provide active torque control to the front drivetrain 10. The planetary gear arrangement 12 allows the front wheels to receive torque from the crank shaft C and the electric machine 14. Fig. 9 is a lever diagram the represents how a planetary gear arrangement acts a torque summing device, adding the torque of the crank shaft/sun 24 with the torque of the ring 32/electric machine 14. As a result, the electric machine 14 may be operated as desired to add torque to the front drivetrain 10.

It is also worthwhile to note that, in this arrangement, speed synchronization is passively controlled by the crank shaft C and the front axles 20, 22. More specifically, in this arrangement, the ring gear 32 is free to travel at the speed required to provide synchronization between the speed of the crank shaft C and the speed of the front axles 20, 22. The speed of the sun gear 24 is dictated by the speed of the crank shaft C (i.e. the speed of the engine) and the speed of the planetary gear set 26 is dictated by the speed that the front wheels are travelling over the road. Front wheel speed is communicated back to the planetary gear set 26 through the axles 20, 22, bevel gear arrangement 18, output shaft 16 and carrier 28. As a result, the speed of the ring gear 32 and the electric machine 14 is dictated the speed of the engine E and the front wheels. Fig. 10 is a lever diagram showing the relationship between the various elements of the planetary gear arrangement 12 in the context of speed synchronization. As shown, the planetary gear arrangement 12 can be modeled as a lever with the sun 24, carrier 28 and ring 32 being represented by different points along the lever. The lever can be placed on a graph in which is represented in the x-y direction. In this diagram, the speed of the ring 32 can be determined when the lever is oriented with the sun 24 and the carrier 28 at their respective speeds. The leftmost lever diagram shows the system when the vehicle is stationary and the engine is idling. If engine/sun 24 speed is increased without change the speed of the front wheels/carrier 28, the speed of the ring 32 will be reduced. The rightmost lever diagram includes an alternative example of an up-shift in the transmission. In this example, the system before the up-shift is represented by a solid line and the system after the shift is represented by a broken line. As can be seen, the up-shift does not change the speed of the front wheels/carrier 28, but it does reduce the speed of the crank shaft/sun 24. As a result, the up-shift causes an increase in the speed of the ring 32 that is relative to the decrease in the speed of the crank shaft/sun 24.

The electric machine 14 of Fig. 1 can also function in different modes of operation. For example, the electric machine 14 may be used for regenerative braking on the front axles 20, 22. It may also be used for "through-the-road" regeneration. The electric machine 14 may also be used to start or stop the engine or to assist the engine during cold starts or to reduce emissions.

An alternative example arrangement is shown in Fig. 2. This arrangement is essentially identical to the arrangement of Fig. 1, except that it includes a decoupler 40 interposed between the crank shaft C and the sun gear 24. The decoupler 40 may be a spring coupler. In this arrangement, the spring coupler torsionally isolates the crank shaft from the front drivetrain to prevent or minimize movement of the nodal point of the crank shaft C.

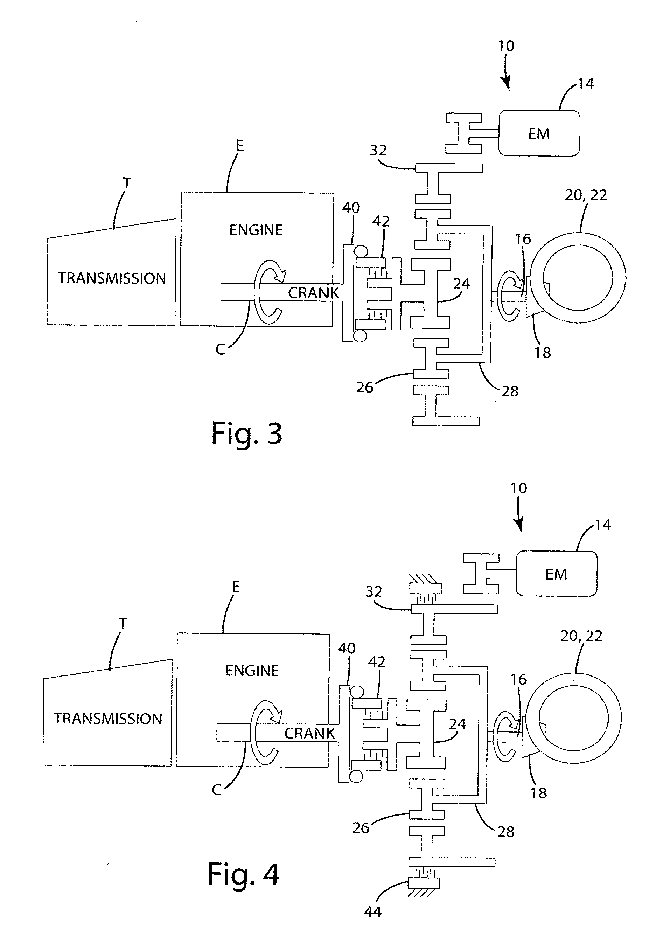

Another alternative example arrangement is shown in Fig. 3. In this arrangement the front drivetrain 10 includes a disconnecting clutch 42 positioned between the crank shaft C and the sun gear 24. The disconnecting clutch 42 allows the front drivetrain 10 to be completely disconnected from the engine E. This can reduce parasitic losses. In the illustrated arrangement, the disconnecting clutch 42 is integrated into the decoupler 40.

Yet another alternative example arrangement is shown in Fig. 4. This arrangement of the drivetrain 10 is essentially identical to the front drivetrain of Fig. 3, except that it also includes a ring gear grounding clutch 44. The ring gear grounding clutch 44 may be selectively operated to ground the ring gear 32, thereby preventing its rotation. In addition to providing the functionality discussed above in connection with the front drivetrain 10 of Fig. 1, this arrangement provides an "off road" or "crawling" capability. To operate in "off road" mode, the transmission T may be placed in neutral to disconnect the engine E from the rear wheels, the disconnecting clutch 42 may be operated to couple the crank shaft C to the sun gear 24 and the ring gear grounding clutch 44 may be operated to lock the ring gear 32. At this point, the crank shaft C is coupled directly to the front wheels via the front drivetrain 10 so that operation of the engine E drives the front wheels. In this arrangement, the planetary gear assembly 12 provides a direct mechanical drive to the front wheels at a fixed gear ratio dictated by the characteristics of the gears in the planetary gear assembly 12.

A further alternative example arrangement is shown in Fig. 5. This arrangement of the drivetrain 10 is essentially identical to the front drivetrain of Fig. 3, except that it also includes a front differential disconnect 46. The front differential disconnect 46 is shown schematically in the enlarged portion of the illustration. The front differential disconnect 46 may be selectively operated to disconnect the differential, front wheels and front axles 20, 22 from the bevel gear arrangement 18. This allows the drive components upstream from the differential to be isolated from the road. In use, the disconnecting clutch 42 and the front differential disconnect 46 may be operated simultaneously to completely isolate the planetary gear assembly 12 and the electric machine 14 from the engine E and the road, which may eliminate spin losses. Although this arrangement includes a disconnect incorporated into the differential, the differential disconnect 46 may be replaced by other disconnect mechanism located in other positions along the drivetrain 10. For example, as an alternative to the differential disconnect 46, the drivetrain may include a disconnecting clutch disposed between the carrier 28 and the bevel gear arrangement 18, such as in output shaft 16. As another alternative, the system may include a pair of clutches that disconnect the front axles 20, 22 from the differential. In addition to reducing losses, this configuration may used when it is desirable to provide an electric machine power take off for driving electric accessories as discussed in more detail below.

The arrangements of Figs. 1-5 include a planetary gear arrangement 12 in which the engine E is coupled to the sun gear 24 and the electric machine 10 is coupled to the ring gear 24. The present invention is implemented in other planetary gear configurations. For example, Fig. 6 shows an embodiment of the front drivetrain 10'. In this embodiment, the crank shaft C is connected to the ring gear 32', the electric machine 14' is coupled to the sun gear 24' and the planetary carrier 28' is coupled to the bevel gear arrangement 18' to drive the front wheels. As shown, this embodiment may include a decoupler 40' disposed between the crank shaft C and the ring gear 32'. As with the previously described arrangements, the decoupler 40' may be a spring coupler that torsionally isolates the crank shaft C.

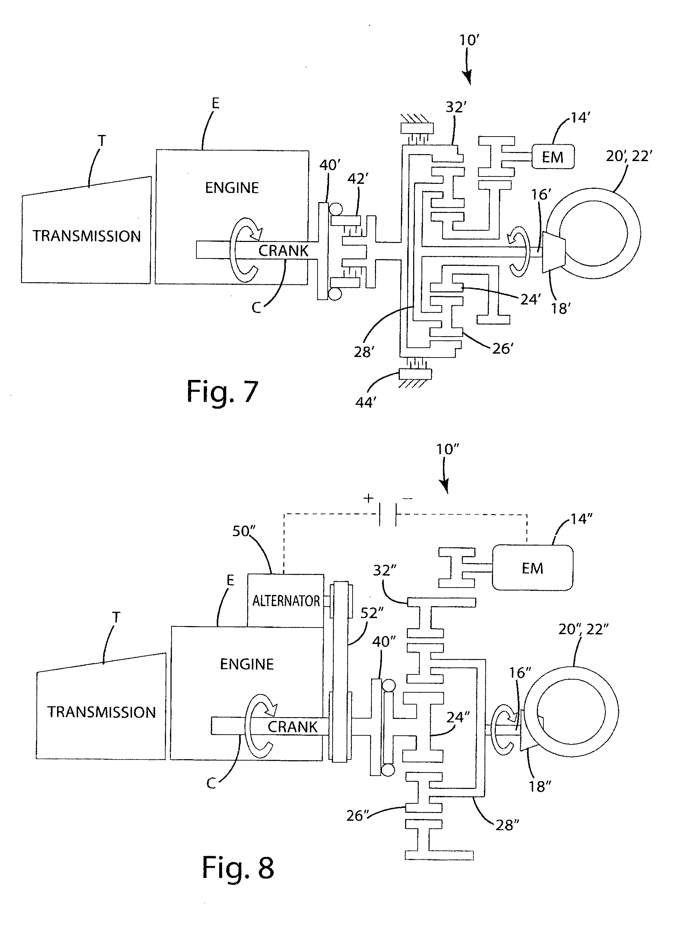

Referring now to Fig. 7, the alternative front drivetrain 10' of Fig. 6 may be provided with a disconnecting clutch 42' for disconnecting the planetary gear arrangement 12' from the crank shaft C. For example, the disconnecting clutch may be a generally conventional clutch disposed along the driveshaft between the crank shaft C and the ring gear 32'. The disconnecting clutch 42' may be operated to isolate the front drivetrain 10' from the engine E. The disconnecting clutch 42' may be integrated into or otherwise combined with the decoupler 40'. For example, as shown in Fig. 7, the front drivetrain 10' may include a spring coupler with an integrated disconnecting clutch.

Referring again to Fig. 7, the alternative front drivetrain 10' may include a ring gear grounding clutch 44' for selectively locking the ring gear 32'. The ring gear grounding clutch 44' enables an electric vehicle ("EV") mode in which the electric machine 14' is capable of directly powering the front wheels. In EV mode, the transmission T may be placed in neutral, the engine disconnecting clutch 42' may be operated to disconnect the engine E from the ring gear 32' and the ring gear grounding clutch 44' may be engaged to lock the ring gear 32'. Once in EV mode, the electric machine 14' may be operated to directly drive the automobile through the front wheels. In this way, the automobile can be driven by the electric machine 14' with the engine E off.

The present invention can be incorporated into a series mode architecture, for example, when it is desirable to eliminate the need for a heavy and expensive traction battery. Fig. 8 shows a schematic representation of a front drivetrain 10" configured in a series mode architecture. Fig. 8 includes reference numerals that correspond with the reference numerals of Fig. 2, except that each reference numeral include in Fig. 8 is denoted with a double prime symbol. This arrangement can be configured so that the electric machine 14" receives power from an alternator/generator 50" that is driven by the engine E. In the illustrated arrangement, the system may include an alternator/generator 50" coupled to the crank shaft C by a belt 52". Although this arrangement includes a belt driven alternator/generator 50", alternative drive configurations may be used. As in a conventional series mode architecture, the output of the alternator/generator 50" may be supplied to the electric machine 14" to operate the electric machine 14" when desired. The system may include power conditioning circuitry, as desired.

Although not shown, the various embodiments of the present invention may be provided with additional features found in conventional engine, electric and hybrid architectures. For example, as noted briefly above, the present invention may be provided with an additional accessory drive that allows the electric machine to drive electrical accessories. The accessory drive may include power take off integrated into or otherwise coupled with the electric machine so that the electric machine can operate the accessory drive belt. In some applications, it may be possible to use the electric machine to affect a dampening function. For example, in some applications, the electric machine may be capable of providing active engine dampening.

Although described primarily in the context of an electric machine, the present invention may also be implemented with a hydraulic motor-pump in place of the electric machine. For example, the system may be provided with a conventional hydraulic motor-pump system having a hydraulic motor-pump, a working fluid, reservoir and an accumulator.

Directional terms, such as "front," "rear," "vertical," "horizontal," "top," "bottom," "upper," "lower," "inner," "inwardly," "outer" and "outwardly," are used to assist in describing the invention based on the orientation of the embodiments shown in the illustrations. The use of directional terms should not be interpreted to limit the invention to any specific orientation(s).

The above description is that of current embodiments of the invention. Various alterations and changes can be made without departing from the scope of the appended claims. This disclosure is presented for illustrative purposes and should not be interpreted as an exhaustive description of all embodiments of the invention or to limit the scope of the claims to the specific elements illustrated or described in connection with these embodiments. Any reference to claim elements in the singular, for example, using the articles "a," "an," "the" or "said," is not to be construed as limiting the element to the singular.

## Claims

1. A front drivetrain (10') for a rear-wheel drive automobile having a north/south oriented engine (E), the front drivetrain (10') comprising:
an electric machine (14') or a hydraulic motor-pump;
a planetary gear arrangement adapted to be operatively coupled to a front end of a crank shaft (C) of the engine (E), the planetary gear arrangement including a sun gear (24'), a planetary gear set (26') carried by a carrier (28') and a ring gear (32'), said ring gear (32') being adapted to be operatively connected to the front end of the crank shaft (C), and said sun gear (24') being operatively coupled to said electric machine (14') or hydraulic motor-pump;
a planetary output shaft (16') coupled to said carrier (28');
a bevel gear arrangement (18') operatively connected to said planetary output shaft (16'); and
at least one front axle (20', 22') for coupling said front drivetrain (10) to front wheels of said automobile.

2. The front drivetrain of claim 1, further including a decoupler (40') for disposition between said planetary gear arrangement and the crank shaft (C).

3. The front drivetrain of claim 1 or 2, further including a disconnecting clutch (42') for disposition between said planetary gear arrangement and the crank shaft (C), wherein the front drivetrain optionally further includes a ring gear grounding clutch (44').

4. The front drivetrain of any of claims 1 to 3, including a spring coupler with integrated clutch (40', 42') for disposition between said planetary gear arrangement and the crank shaft (C).

5. The front drivetrain of any of claims 1 to 4, further including:
a disconnecting clutch disposed between said planetary gear arrangement and said at least one front axle (20', 22'); and/or
an alternator/generator (50") driven by the engine, said alternator/generator (50") providing electrical power to said electric machine (14') or hydraulic motor-pump.

6. An automobile comprising:
an engine (E) disposed in a north/south orientation, said engine having a crank shaft (C) with a front end and a rear end;
a rear drivetrain coupled to said rear end of said crank shaft (C), said rear drivetrain receiving power from said engine (E) and providing motive force to at least one rear wheel;
a front drivetrain coupled to said front end of said crank shaft (C), said front drivetrain including:
an electric machine (14') or a hydraulic motor-pump;
a planetary gear arrangement operatively coupled to said front end of said crank shaft (C), the planetary gear arrangement including a sun gear (24'), a planetary gear set (26') carried by a carrier (28') and a ring gear (32'), said ring gear (32') being operatively connected to said front end of said crank shaft (C), and said sun gear (24') being operatively coupled to said electric machine (14') or hydraulic motor-pump; and
a drivetrain subassembly (16', 18', 20', 22') coupled to said carrier (28').

7. The automobile of claim 6, wherein said drivetrain subassembly includes a planetary output shaft (16'), a bevel gear arrangement (18') operatively connected to said planetary output shaft and at least one front axle (20', 22') coupled between said bevel gear arrangement (18') and at least one front wheel.

8. The automobile of claim 6 or 7, wherein said front drivetrain further includes a decoupler (40') disposed between said planetary gear arrangement and the crank shaft (C).

9. The automobile of any of claims 6 to 8, wherein said front drivetrain further includes a disconnecting clutch (42') disposed between said planetary gear arrangement and said crank shaft (C), and wherein said front drivetrain optionally further includes a ring gear grounding clutch (44').

10. The automobile of any of claims 6 to 9, wherein said front drivetrain includes a spring coupler with integrated clutch (40', 42') disposed between said planetary gear arrangement and said crank shaft (C).

11. The automobile of any of claims 6 to 10, wherein:
said front drivetrain further includes a disconnecting clutch disposed between said planetary gear arrangement and said at least one front axle (20', 22'); and/or
the automobile further includes an alternator/generator (50") driven by the engine, said alternator/generator (50") providing electrical power to said electric machine (14') or hydraulic motor-pump.

## Patentansprüche

1. Ein vorderer Antriebsstrang (10') für ein Automobil mit Heckantrieb und längs ausgerichtetem Motor (E), umfassend
eine Elektromaschine (14') oder eine hydraulische Motorpumpe;
ein zum gemeinsamen Betrieb mit dem vorderen Ende einer Kurbelwelle (C) des Motors (E) geeignetes Planetengetriebe, das Planetengetriebe umfassend ein Sonnenrad (24'), einen von einem Träger (28') getragenen Planetenradsatz (26') und ein Hohlrad (32'), wobei das Hohlrad (32') zum gemeinsamen Betrieb mit dem vorderen Ende der Kurbelwelle (C) und dem Sonnenrad (24') geeignet ist und mit der Elektromaschine (14') oder einer hydraulischen Motorpumpe gekoppelt ist;
eine mit dem genannten Träger (28') verbundene Planetenantriebswelle (16');
ein Kegelradgetriebe (18') zum gemeinsamen Betrieb mit der Planetenantriebswelle (16'); und
mindestens eine Vorderachse (20', 22'), die mit dem genannten vorderen Antriebsstrang (10) zu den Vorderrädern des genannten Automobils gekoppelt werden kann.

2. Der vordere Antriebsstrang gemäß Anspruch 1, zudem umfassend eine Trennkupplung (40') für die Anordnung zwischen dem Planetengetriebe und der Kurbelwelle (C).

3. Der vordere Antriebsstrang gemäß Anspruch 1 oder 2, zudem umfassend eine Ausrückkupplung (42') für die Anordnung zwischen dem Planetengetriebe und der Kurbelwelle (C), wobei der vordere Antriebsstrang des Weiteren wahlweise eine Hohlrad-Halt-Kupplung (44') aufweist.

4. Der vordere Antriebsstrang gemäß irgendeinem der Ansprüche 1 bis 3, enthaltend ein Federverbindungsstück mit integrierter Kupplung (40', 42') für die Anordnung zwischen dem Planetengetriebe und der Kurbelwelle (C).

5. Der vordere Antriebsstrang gemäß irgendeinem der Ansprüche 1 bis 4, welcher des Weiteren aufweist
eine zwischen dem Planetengetriebe und der mindestens einen Vorderachse (20', 22') angeordnete Ausrückkupplung; und/oder
eine Lichtmaschine/einen Generator (50"), vom Motor angetrieben, wobei die Lichtmaschine/der Generator (50") die Elektromaschine (14') oder hydraulische Motorpumpe mit elektrischer Leistung versorgt.

6. Ein Automobil, umfassend
einen längs ausgerichteten Motor (E), wobei dieser Motor mit einer Kurbelwelle (C) mit einem vorderen Ende und einem hinterem Ende ausgestattet ist;
einen mit dem hinteren Ende der Kurbelwelle (C) verbundenen hinteren Antriebsstrang, wobei der hintere Antriebsstrang vom Motor (E) angetrieben wird und Bewegungskraft auf mindestens ein Hinterrad überträgt;
einen mit dem vorderen Ende der Kurbelwelle (C) verbundenen vorderen Antriebsstrang, der vordere Antriebsstrang aufweisend
eine Elektromaschine (14') oder eine hydraulischen Motorpumpe;
ein mit dem vorderen Ende der Kurbelwelle (C) gekoppeltes Planetengetriebe, das ein Sonnenrad (24'), einen von einem Träger (28') getragenen Planetenradsatz (26') und ein Hohlrad (32') aufweist, wobei das Hohlrad (32') mit dem vorderen Ende der Kurbelwelle (C) verbunden ist und das Sonnenrad (24') mit der Elektromaschine (14') oder hydraulischen Motorpumpe gekoppelt ist; und
eine mit dem genannten Träger (28') verbundene Antriebsstrang-Untergruppe (16', 18', 20', 22')..

7. Das Automobil gemäß Anspruch 6, wobei die Antriebsstrang-Untergruppe eine Planetengetriebe-Antriebswelle (16'), ein Kegelradgetriebe (18') zum gemeinsamen Betrieb mit der Planetengetriebe-Antriebswelle, und mindestens eine Vorderachse (20', 22'), gekoppelt zwischen dem Kegelradgetriebe (18') und mindestens einem Vorderrad, aufweist.

8. Das Automobil gemäß Anspruch 6 oder 7, wobei der vordere Antriebsstrang des Weiteren eine Trennkupplung (40') aufweist, angeordnet zwischen dem Planetengetriebe und der Kurbelwelle (C).

9. Das Automobil gemäß irgendeinem der Ansprüche 6 bis 8, wobei der vordere Antriebsstrang zudem eine Ausrückkupplung (42') aufweist, angeordnet zwisehen dem Planetengetriebe und der Kurbelwelle (C), wobei der vordere Antriebsstrang zudem wahlweise eine Hohlrad-Halte-Kupplung (44') aufweist.

10. Das Automobil gemäß irgendeinem der Ansprüche 6 bis 9, wobei der vordere Antriebsstrang zudem ein Federverbindungsstück mit integrierter Kupplung (40', 42'), angeordnet zwischen dem Planetengetriebe und der Kurbelwelle (C), vorsieht.

11. Das Automobil gemäß irgendeinem der Ansprüche 6 bis 10, wobei
der vordere Antriebsstrang des Weiteren eine Ausrückkupplung aufweist, angeordnet zwischen dem Planetengetriebe und der mindestens einen Vorderachse (20', 22'); und/oder
das Automobil zudem eine Lichtmaschine/einen Generator (50") aufweist, angetrieben vom Motor, wobei die Lichtmaschine/der Generator (50") die Elektromaschine (14') oder hydraulische Motorpumpe mit elektrischer Leistung versorgt.

## Revendications

1. Un train de transmission avant (10') pour une automobile à traction arrière possédant un moteur orienté nord/sud (E), le train de transmission avant (10') comprenant :
une machine électrique (14') ou une motopompe hydraulique,
un agencement d'engrenage planétaire adapté de façon à être opérationnellement couplé à une extrémité avant d'un vilebrequin (C) du moteur (E), l'agencement d'engrenage planétaire comprenant un engrenage solaire (24'), un train d'engrenages planétaires (26') porté par un support (28') et une couronne (32'), ladite couronne (32') étant adaptée de façon à être opérationnellement raccordée à l'extrémité avant du vilebrequin (C), et ledit engrenage solaire (24') étant opérationnellement couplé à ladite machine électrique (14') ou ladite motopompe hydraulique,
un arbre de sortie planétaire (16') couplé audit support (28'),
un agencement d'engrenage conique (18') opérationnellement raccordé audit arbre de sortie planétaire (16'), et
au moins un essieu avant (20', 22') destiné à coupler ledit train de transmission avant (10) à des roues avant de ladite automobile.

2. Le train de transmission avant selon la revendication 1, comprenant en outre un découpleur (40') destiné à une disposition entre ledit agencement d'engrenage planétaire et le vilebrequin (C).

3. Le train de transmission avant selon la revendication 1 ou 2, comprenant en outre un embrayage de séparation (42') destiné à une disposition entre ledit agencement d'engrenage planétaire et le vilebrequin (C), où le train de transmission avant comprend en outre éventuellement un embrayage de mise à la masse de couronne (44').

4. Le train de transmission avant selon l'une quelconque des revendications 1 à 3, comprenant un coupleur de ressorts avec un embrayage intégré (40', 42') destiné à une disposition entre ledit agencement d'engrenage planétaire et le vilebrequin (C).

5. Le train de transmission avant selon l'une quelconque des revendications 1 à 4, comprenant en outre :
un embrayage de séparation disposé entre ledit agencement d'engrenage planétaire et ledit au moins un essieu avant (20', 22'), et/ou
un alternateur/générateur (50") entraîné par le moteur, ledit alternateur/générateur (50") fournissant une alimentation électrique à ladite machine électrique (14') ou à ladite motopompe hydraulique.

6. Une automobile comprenant :
un moteur (E) disposé dans une orientation nord/sud, ledit moteur possédant un vilebrequin (C) avec une extrémité avant et une extrémité arrière,
un train de transmission arrière couplé à ladite extrémité arrière dudit vilebrequin (C), ledit train de transmission arrière recevant de la puissance provenant dudit moteur (E) et fournissant une force motrice à au moins une roue arrière,
un train de transmission avant couplé à ladite extrémité avant dudit vilebrequin (C), ledit train de transmission avant comprenant :
une machine électrique (14') ou une motopompe hydraulique,
un agencement d'engrenage planétaire opérationnellement couplé à ladite extrémité avant dudit vilebrequin (C), l'agencement d'engrenage planétaire comprenant un engrenage solaire (24'), un train d'engrenages planétaires (26') porté par un support (28') et une couronne (32'), ladite couronne (32') étant opérationnellement raccordée à ladite extrémité avant dudit vilebrequin (C) et ledit engrenage solaire (24') étant opérationnellement couplé à ladite machine électrique (14') ou à ladite motopompe hydraulique, et
un sous-ensemble train de transmission (16', 18', 20', 22') couplé audit support (28').

7. L'automobile selon la revendication 6, où ledit sous-ensemble train de transmission comprend un arbre de sortie planétaire (16'), un agencement d'engrenage conique (18') opérationnellement raccordé audit arbre de sortie planétaire et au moins un essieu avant (20', 22') couplé entre ledit agencement d'engrenage conique (18') et au moins une roue avant.

8. L'automobile selon la revendication 6 ou 7, où ledit train de transmission avant comprend en outre un découpleur (40') disposé entre ledit agencement d'engrenage planétaire et le vilebrequin (C).

9. L'automobile selon l'une quelconque des revendications 6 à 8, où ledit train de transmission avant comprend en outre un embrayage de séparation (42') disposé entre ledit agencement d'engrenage planétaire et ledit vilebrequin (C), et où ledit train de transmission avant comprend en outre éventuellement un embrayage de mise à la masse de couronne (44').

10. L'automobile selon l'une quelconque des revendications 6 à 9, où ledit train de transmission avant comprend un coupleur de ressorts avec un embrayage intégré (40', 42') disposé entre ledit agencement d'engrenage planétaire et ledit vilebrequin (C).

11. L'automobile selon l'une quelconque des revendications 6 à 10, où :
ledit train de transmission avant comprend en outre un embrayage de séparation disposé entre ledit agencement d'engrenage planétaire et ledit au moins un essieu avant (20', 22'), et/ou
l'automobile comprend en outre un alternateur/générateur (50") entraîné par le moteur, ledit alternateur/générateur (50") fournissant une alimentation électrique à ladite machine électrique (14') ou à ladite motopompe hydraulique.
